# EUROPEAN PATENT APPLICATION

(11) **EP 4 807 463 A1**
(43) Date of publication of application: **16.09.2026**
(21) Application number: 25163132.1
(22) Date of filing: 12.03.2025
(51) Int. Cl.: G03H 1/04, B01L 3/00, G03H 1/08, G03H 1/00

(54) **IN-LINE LENS-FREE HOLOGRAPHIC IMAGING OF OBJECTS CONTAINED IN A LIQUID SAMPLE IN A MICROWELL**

(71) Applicant: Imec VZW, 3001 Leuven (BE)
(72) Inventor: Li, Yuqian, 3001 Heverlee (BE); Lin, Ziduo, 3001 Heverlee (BE); Luo, Zhenxiang, 3000 Leuven (BE); Jayapala, Murali, 3300 Kumtich (BE); Lemonidis, Vasileios, 3001 Heverlee (BE)
(74) Representative: Roth, Sebastian

(57) **Abstract**

This disclosure is concerned with imaging at least one or more objects contained inside a liquid sample. A method of the disclosure comprises generating at least one hologram of the one or more objects contained in the liquid sample by using in-line lens-free imaging. The at least one hologram includes at least one artifact, which is at least caused by the presence of the liquid sample and affects the at least one characteristic of the one or more objects contained in the liquid sample. The method comprises removing fully or partially the at least one artifact or the cause of the at least one artifact. The method further comprises generating an image, after or during removing the at least one artifact or the cause of the at least one artifact, the image comprising the one or more objects. The method also comprises recognizing the at least one characteristic of the one or more objects based on the image.

## Description

### TECHNICAL FIELD

The present disclosure relates to holographic imaging and image processing. In particular, the disclosure is concerned with in-line lens-free holographic imaging of at least one or more objects contained inside a liquid sample, which is held in a microwell. The disclosure thus proposes a method and an apparatus for imaging the one or more objects in the liquid sample in the microwell. The disclosure also proposes methods for recognizing at least one characteristic of the one or more objects contained in the liquid sample in the microwell.

### BACKGROUND

A microwell-based system is a platform that typically comprises an array of small wells (referred to as microwells), for example, formed on a microplate or chip. Each microwell is designed to hold a tiny volume of a liquid sample. Microwell-based systems are widely used in biomedical and life science research for high-throughput screening, single-cell analysis, and biochemical assays.

The microwells offer advantages such as precise confinement, controlled liquid sample volumes, and compatibility with automated imaging techniques. For example, for analyzing objects suspended in a liquid sample in a microwell, imaging may extract valuable information, such as specific characteristics of the objects. Conventionally, the imaging of objects in a liquid samples relies on microscopic techniques.

Holographic imaging may provide a compact, high-throughput alternative imaging method, but has been applied only to analyze isolated liquid samples, but not objects inside of liquid samples. This is mainly due to the fact, that there are major problems when this imaging technique is applied to such a case. One problem is that lensing effects, which are caused by the liquid sample holding the objects, distort the illumination wavefront and thus cause information loss. Another problem is that artifacts appear in the holograms or images, which affect the quality of the objects inside the liquid samples.

Moreover, different conditions (e.g., different types of liquid samples and/or different object materials, or shapes, or densities, etc.) bring extra challenges for obtaining high quality images with holographic imaging.

Holographic imaging of an object may be performed using either in-line transmission or off-axis reflection holography. Off-axis holographic imaging uses a reference beam with a non-zero angle with respect to a signal beam. With this technique, both the amplitude and the phase of the object can be retrieved by digital reconstruction methods. However, off-axis holographic imaging has a limited field of view, because of the needed reference beam. In particular, there needs to be enough space to allow the reference beam to reach the entire sensor of the holographic imager.

In-line holographic imaging has only one optical path, and thus offers a simpler setup, easier alignment, and a more compact design compared to off-axis holographic imaging. In addition, for in-line holographic imaging there is no need for a reference beam, and thus no field of view limitation. In-line holographic imaging may also be lens-free, due to the single optical path. However, compared to off-axis holographic imaging, the phase information is not available. Because of this, the phase retrieval during image reconstruction of the hologram is different, and also any kind of artifact suppression - which is essential for imaging objects inside of liquid samples - becomes different.

### SUMMARY

In view of the above, this disclosure aims to provide a solution to use in-line lens free holographic imaging of objects contained within liquid samples in microwells.

An objective is to avoid and/or remove any artifacts in the hologram and/or image, and thus to obtain high-quality images of the objects in the liquid samples contained in the microwells.

These and other objectives are achieved by the solutions of this disclosure as provided in the independent claims. Advantageous implementations of are defined in the dependent claims.

A first aspect of this disclosure provides a method for imaging and recognizing at least one characteristic of one or more objects contained in a liquid sample in a microwell, the method comprising: generating at least one hologram of the one or more objects contained in the liquid sample, wherein the at least one hologram is generated using in-line lens-free imaging; wherein the at least one hologram includes at least one artifact, which is at least caused by the presence of the liquid sample and affects the at least one characteristic of the one or more objects contained in the liquid sample; removing fully or partially the at least one artifact or the cause of the at least one artifact; generating an image, after or during removing the at least one artifact or the cause of the at least one artifact, comprising the one or more objects; and recognizing the at least one characteristic of the one or more objects based on the image.

A microwell is a small, well-defined cavity, typically part of a microplate or microfluidic chip, which is designed to hold a precise volume of liquid, referred to as the liquid sample. The microwell may serve as a confined environment for biological, chemical, or physical experiments, enabling controlled sample handling, high-throughput screening, and automated analysis. Microwells are commonly used in cell culture, biochemical assays, and imaging applications, where the small size ensures efficient reagent use and precise experimental conditions. Typically, a microfluidic chip or microplate contains an array of many microwells, which may be arranged in a structured grid pattern. Each microwell of the array may serve as an individual reaction or observation chamber. The design of the array ensures uniformity, scalability, and automation compatibility.

The shape of the microwell is not limited in this disclosure. The shape of the microwell may be cylindrical, semi-cylindrical, conical, rectangular, or the like. The depth or aspect ratio or diameter of the microwell is also not limited.

The present disclosure realizes that many artifacts are caused by the presence of the liquid sample containing the object, and understands the underlying mechanisms that cause the artifacts. Thus, the solutions of this disclosure can take into account such artifacts or causes of artifacts, which arise due to the fact that the objects are enclosed in a liquid sample. The method of the first aspect allows removing, or avoiding in the first place, such artifacts, which are caused by the presence of the liquid sample.

Because of this, the method of the first aspect can use in-line lens free imaging to image the one or more objects inside the liquid sample. The in-line lens free holographic imaging used in the method of the first aspect is based on the assumption that light going through the liquid sample has a certain portion that is not scattered by the object in the liquid sample. The method of the first aspect is thus able to obtain high-quality holographic (and reconstructed) images of the objects, even though the objects are contained in the liquid samples.

With the in-line lens-free holographic imaging - in contrast to off-axis holographic imaging - a higher image quality may be obtainable, which enables complex downstream analysis including morphological information of the one or more objects. Morphological information refers to data about the shape, structure, and/or form of the objects, and may generally be referred to as physical characteristics of the objects. Obtaining such morphological information may enable analyzing and quantifying the shape and structure of the one or more objects within the liquid sample, and may thus allow object recognition, or the like. Notably, the one or more objects inside the liquid sample are unknown regarding their characteristics, before the method is performed. In contrast, some conventional imaging techniques using off-axis holographic imaging assume the objects to be in principle known, for instance, their material, dimensions, etc. In this case, known thresholds of different parts in the frequency domain may be used to remove unwanted signals or noise.

In addition, the in-line lens-free holographic imaging used in the method of the first aspect also leads to a simpler setup for imaging the one or more objects within the liquid sample, easier alignment, and/or a more compact design than achievable with off-axis holographic imaging.

The method of the first aspect further additionally allows recognizing the one or more characteristics of the object, including its physical characteristics like size and shape, which were or would have been fully suppressed by the at least one artifact. The method also allows recognizing one or more characteristic of the object, which were or would have been partly suppressed by the at least one artifact, and were already made more recognizable iterations of the method of the first aspect. The recognizing of the at least one characteristic is enabled by the improved hologram and image quality, because of the at least partly removed artifact.

Notably, the one or more objects together with the one or more liquid samples, in which they are contained, may be referred to as one or more test samples. A test sample may, for instance, refer to one or a group of liquid samples with relevant objects inside, particularly, on a fluidic carrier. Thus, the method may be useful for imaging test samples. The objects may be any kind of material particles or biological material, like cells, DNA, living organisms like bacteria, etc. The liquid samples may be made of a liquid suitable for holding the object, for instance, water, oil, or any other suitable carrier liquid for the objects.

In an implementation of the method, the at least one artifact comprises: an interference in the hologram of a first holographic signal of the liquid sample and one or more second holographic signals of the one or more objects; and/or noise in the first holographic signal of the liquid sample and/or the one or more second holographic signals of the one or more objects.

Generally, it is understood by this disclosure that the presence of the liquid sample may cause certain artifacts (e.g., ring-like artifacts) in the holographic image of the object inside the liquid sample by various physical mechanisms. The artifacts may generally be caused by the interaction of the hologram signatures (i.e., holographic signals) of the liquid sample and the object inside the liquid sample. For example, the surface of the liquid sample may cause a lensing effect, which may lead at least to a distortion of the holographic signal of the object inside the liquid sample, and may even lead to the holographic signal of the object being lost. As another example, the holographic signal of the liquid sample may interfere with the holographic signal of the object. As another example, the liquid sample may cause an uneven illumination intensity, like local darkness and local saturation on a sensor used to obtain the holographic image. The understanding of these kinds of mechanisms allows an efficient removal or suppression of the artifacts.

In an implementation of the method, removing the at least one artifact or the cause of the at least one artifact comprises regenerating the at least one hologram of the one or more objects contained in the liquid sample, wherein a second illumination wavefront is used for regenerating the at least one hologram, which is different from a first illumination wavefront that was used for generating the at least one hologram.

This implementation uses wavefront engineering to remove the artifacts, in particular, to suppress a cause of the artifacts. In particular, by knowing the effect of the wavefront distortion caused by the liquid sample in the view - wherein the knowledge could be gained from an earlier image of the same object contained in the liquid sample or from experience of imaging objects in similar liquid samples - it is possible to adjust the wavefront of the illumination to compensate the distortion caused by the liquid sample. For instance, by adjusting the wavefront curvature with an optical component. For example, if the at least one artifact is caused by a lensing effect of the liquid sample, the wavefront engineering may advantageously be applied for the removal.

In an implementation of the method, the second illumination wavefront comprises a single wavelength or multiple wavelengths.

In an implementation of the method, removing the at least one artifact or the cause of the at least one artifact comprises processing the at least one hologram with one or more numerical optimization algorithms, such as a fast iterative shrinkage-thresholding (FISTA) algorithm or an Alternating Direction Method of Multipliers (ADMM) algorithm.

In an implementation of the method, removing the at least one artifact or the cause of the at least one artifact comprises processing the at least one hologram by at least one image processing method.

For instance, the at least one image processing method may include one or more of the following: image correction, image transformation, image operations including blending, histograms, moments, feature detection, feature extraction, simulation, thresholding, object detection, classification methods, machine learning, and deep learning.

Feature extraction methods may also be used to derive or calculate one or more characteristics or features of the one or more objects. Generally, machine learning methods may be used for the at least one image processing method.

In an implementation of the method, removing the at least one artifact or the cause of the at least one artifact comprises generating the image by multi-depth reconstruction of the at least one hologram.

For instance, if the at least one artifact is caused by different imaging depths of, respectively, different parts of the liquid sample and/or different objects in the liquid sample, then the multi-depth reconstruction may advantageously be used.

In an implementation of the method, the method further comprises: determining a strength of the at least one artifact; and selecting how to remove the at least one artifact or the cause of the at least one artifact based on the determined strength.

In particular, one or more of the previously described techniques for removing the at least one artifact or the cause of the at least one artifact may be used. That is, depending on the determined strength, one or more of: wavefront engineering, FISTA or ADMM processing, image processing, or multi-depth reconstruction may be applied.

In an implementation of the method, the strength of the at least one artifact is determined by comparing at least one parameter of the one or more objects in the at least one hologram and in at least one reference hologram of the one or more objects without liquid sample.

In an implementation of the method, the at least one characteristic of the one or more objects comprises at least one of the following: a number of the one or more objects contained in the liquid sample; a density of the one or more objects in the liquid sample; a respective size and/or shape of each object of the one or more objects in the liquid sample; a respective position of each object of the one or more objects in the liquid sample; a motion pattern of the one or more objects in the liquid sample; a reflective index of the one or more objects in the liquid sample.

A second aspect of this disclosure provides an apparatus for imaging and recognizing at least one characteristic of one or more objects contained in a liquid sample in a microwell, the apparatus comprising: a holographic imager configured to generate at least one hologram of the one or more objects contained in the liquid sample using in-line lens-free imaging; wherein the at least one hologram includes at least one artifact, which is at least caused by the presence of the liquid sample and affects the at least one characteristic of the one or more objects in the liquid sample; and a processor configured to remove fully or partially the at least one artifact or the cause of the at least one artifact; wherein the processor is further configured to generate an image, after or during removing the at least one artifact or the cause of the at least one artifact, comprising the one or more objects, and to recognize the at least one characteristic of the one or more objects based on the image.

The apparatus of the second aspect may have implementations that correspond to the implementations of the method of the first aspect. The apparatus of the second aspect may provide similar advantages as described above for the method of the first aspect and its implementations.

For example, the processor of the apparatus may be configured to control the holographic imager to obtain the second hologram by in-line lens-free imaging, and to generate the image. The processor may also be configured to process the hologram and/or to process the image.

A third aspect of this disclosure provides a computer-implemented method for recognizing at least one characteristic of one or more objects contained in a liquid sample in a microwell, the method comprising: obtaining at least one hologram of the one or more objects contained in the liquid sample, wherein the at least one hologram has been previously generated using in-line lens-free imaging; wherein the at least one hologram includes at least one artifact, which is at least caused by the presence of the liquid sample and affects the at least one characteristic of the one or more objects contained in the liquid sample; processing the at least one hologram using a computational model, wherein the computational model removes fully or partially the at least one artifact; generating an image, after or during removing the at least one artifact, comprising the one or more objects; and recognizing the at least one characteristic of the one or more objects based on the image.

The method of the third aspect may have implementations that correspond to the implementations of the method of the first aspect. The method of the third aspect may provide similar advantages as described above for the method of the first aspect and its implementations.

Notably, in the method of the third aspect, the steps of "generating" and "recognizing" could be done by the computational model as well. That is, at least the artifact removal step is done with the use of the computational model.

In an implementation of the computer-implemented method, the computational model is a deep learning neural network (DNN).

For instance, the DNN is a derived method based on convolutional neural network (CNN). The DNN may be trained to enable it to remove the at least one artifact or the cause of the at least one artifact efficiently. The training may be performed using a dataset, in particular, a simulated dataset; in another embodiment, the dataset can be real-world data. Training parameters and procedures are described later.

A fourth aspect of this disclosure provides a computer program comprising instructions which, when the program is executed by a processor, for example the processor of the apparatus of the second aspect, causes the processor to perform the method according to the third aspect.

In summary of the above aspects and implementations, this disclosure addresses the challenging problem of generating high-quality images of objects inside liquid samples in microwells. The liquid samples and objects can introduce many kinds of artifacts. The disclosure proposes holographic imaging using in-line lens-free imaging, and a meta-pipeline to see the objects inside liquid samples more clearly. The disclosure proposes both hardware-based and software-based aspects of the solution, which may be applied depending on, for example, different kinds or levels of artifacts that are caused by different underlying mechanisms. With the ability of seeing the objects inside the liquid samples more clearly with the solutions of the present disclosure, subsequent processing steps like the detection of the one or more characteristics of the objects, a classification of objects (e.g. based on the characteristics), and a tracking of the objects (e.g. based on the characteristics), can be performed. This enables a broader range of applications, like cell treatments, bacterial culturing, etc.

### BRIEF DESCRIPTION OF THE DRAWINGS

The above described aspects and implementations are explained in the following description of embodiments with respect to the enclosed drawings:
- FIG. 1: schematically illustrates holographic imaging of an object contained in a liquid sample in a microwell.
- FIG. 2: shows a method for imaging and recognizing at least one characteristic of an object contained in a liquid sample in a microwell, according to this disclosure.
- FIG. 3: schematically illustrates different mechanism of artifacts caused by the presence of a liquid sample when imaging an object in the liquid sample.
- FIG. 4: shows an exemplary pipeline for removing one or more artifacts or a cause of the one or more artifacts from a hologram.
- FIG. 5: compares various methods of removing the one or more artifacts or the cause of the one or more artifacts from the hologram with respect to a strength of improvement and effort.
- FIG. 6: shows a method using a FISTA algorithm for removing stronger artifacts from a hologram.
- FIG. 7: shows a method using conventional image and signal processing for removing weaker artifacts from a hologram.
- FIG. 8: illustrates a method using wavefront engineering to remove causes of artifacts in a hologram.
- FIG. 9: illustrates a method using multi-depths reconstruction for removing artifacts from a hologram.
- FIG. 10: shows a computer-implemented method for recognizing at least one characteristic of one or more objects contained in one or more liquid samples in a microwell, according to this disclosure.
- FIG. 11: shows a computational model, particularly a deep neural network, which can be used in the method of FIG. 10.
- FIG. 12: shows an apparatus for imaging and recognizing at least one characteristic of one or more objects contained in a liquid sample in a microwell, according to this disclosure.
- FIG. 13: highlights the in-line and lens-free holographic imaging configuration of the apparatus according to this disclosure.

### DETAILED DESCRIPTION OF EMBODIMENTS

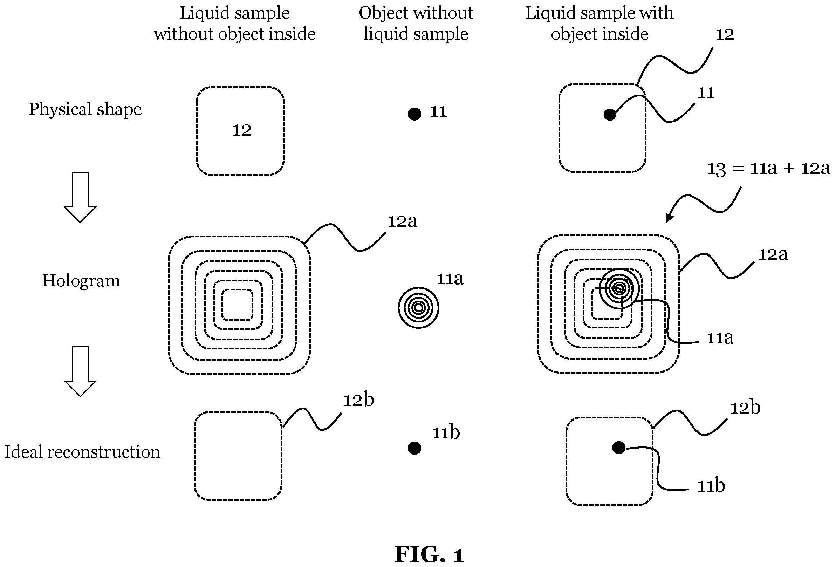

FIG. 1 illustrates schematically a holographic imaging of an object 11 in a liquid sample 12. The liquid sample 12 is contained in a microwell, which may made of a biocompatible, and/or transparent, and/or chemically resistant material. For example, the material of the microwell may comprise polystyrene, PMMA, glass, silicon, polycarbonate, plastic or the like. The microwell holding the liquid sample 12 may be one of many microwells, which are arranged in an array, for instance, on a bio chip. Each microwell may contain a liquid sample 12, and the method of this disclosure can be performed on multiple liquid samples in parallel or consecutively.

In particular, FIG. 1 shows on the top a physical shape of the liquid sample 12 without any object 11 inside, of an object 11 without liquid sample 12, and of the liquid sample 12 including the object 11 inside. The physical shape of the liquid sample 12 is just schematically illustrated in FIG. 1, and is defined by the shape of the microwell, which is formed by a solid material. In an embodiment, the solid material is a transparent solid material, i.e., the microwell is transparent. For instance, the shape of the microwell may be cylindrical, conical, cone shaped, rectangular, or the like, and thus likewise that of the liquid sample 12. One advantage of the use of a microwell is accordingly the well-defined volume and shape of the liquid sample. This is particularly beneficial for the imaging method of this disclosure.

In the middle of FIG. 1, the respective holograms after holographic imaging said physical shapes are illustrated. The liquid sample 12 alone results in a holographic signal 12a (left, e.g. referred to as a first ring-like pattern, wherein the pattern does not comprises strictly circular rings in this case, but it could), the object 11 alone results in a holographic signal 11a (middle, e.g. referred to as a second ring-like pattern), and the combination of the liquid sample 12 and the object 11 in the liquid sample 12 results in a hologram 13 (right) based on a complex interaction of the two ideal holographic signals 11a, 12a (e.g., interactions of the first and second ring-like pattern). The respective holograms 13 can be reconstructed, wherein ideal reconstruction is assumed. The bottom of FIG. 1 shows images resulting from the reconstruction. In particular, the image 12b of only the liquid sample 12, the image 11b of only the object 11, and the combined image of the liquid sample 12 and object 11 are shown. Under ideal circumstances, these images resemble the physical shapes of the liquid sample 12 and object 11.

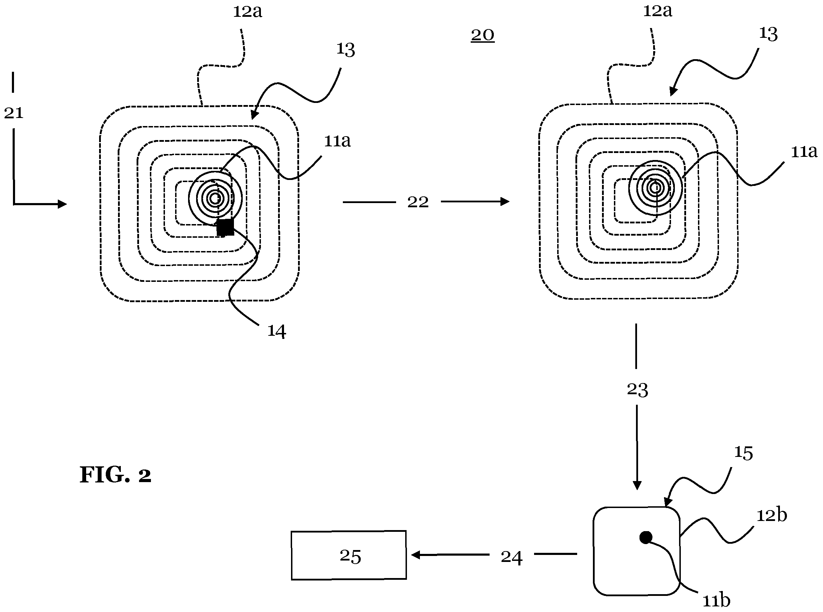

As has been discussed above, artifacts may appear in the hologram 13 of the object 11 contained in the liquid sample 12, which may make it hard to image and recognize characteristic of the object 11. Therefore, FIG. 2 shows a method 20 according to this disclosure for imaging and recognizing at least one characteristic 25 of an object 11 contained in a liquid sample 12, wherein the method 20 can cope with such artifacts.

The method 20 particularly comprises a step 21 of generating at least one hologram 13 of the objects 11 contained in the liquid sample 12 using in-line and lens-free holographic imaging. For reasons of simplicity, like in FIG. 1, only one object 11 is shown in the liquid sample 12, however, the method 20 works with multiple objects 11 as well. The at least one hologram 13 may be generated using in-line lens-free imaging. As shown in FIG. 2, the at least one hologram 13 now includes at least one artifact 14. This at least one artifact 14 is caused by the presence of the liquid sample 12, and affects the at least one characteristic 25 of the object 11 contained in the liquid sample 12, which is to be recognized.

The method 20 further comprises a step 22 of removing fully or partially the at least one artifact 14, or the cause of the at least one artifact 14. Different ways to remove the artifact 14 or the cause of the artifact 14 are described later.

The method 20 further comprises a step 23 of generating an image 15 after or during removing the at least one artifact 14 or the cause of the at least one artifact 14. The image 15 may be generated by reconstruction of the hologram 13 after artifact removal, for example, by reconstruction methods known in the art. The image 15 comprises the object 11, and may comprise the liquid sample 12 as shown in FIG. 2. In another embodiment, the image 15 comprises the object 11 where the liquid sample 12 and the artifact are both removed.

The method 20 then comprises a step 24 of recognizing the at least one characteristic 25 of the object 11 based on the image 15, wherein the determination of the characteristic 25 is not anymore prevented of made difficult by the artifact 14. The at least one characteristic 25 may be directly derived from the image 15, for instance, if the characteristic is a shape or size or location or the like. Other characteristics 25 could be obtained by post-processing the image 15.

The method 20 of this disclosure is particularly efficient if, in an exemplary embodiment, the microwell material is transparent. While in this embodiment both the microwell material and the liquid sample are transparent, the medium (liquid sample) in the microwell and the medium of the microwell are still different, allowing the method 20 to efficiently remove artifacts as described above.

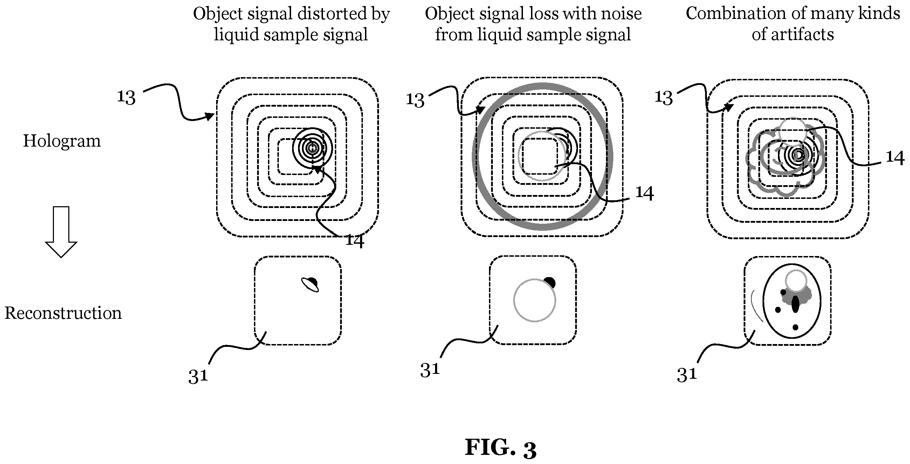

FIG. 3 illustrates some possible causes of artifacts 14, which affect the object 11 - particularly make it difficult to derive the characteristic(s) 25 - and are caused by the presence of the liquid sample 12. For instance, an artifact 14 may be caused by an interference in the hologram 13 of the holographic signal 12a of the liquid sample 12 and the holographic signal 11a of the object 11 (e.g., interference of the first and second ring patterns). This is shown on the left side of FIG. 3, wherein the object signal is distorted by the liquid sample signal. This may also lead to an artifact in an image 31, after reconstruction of the hologram 13.

Also noise in the holographic signal 12a of the liquid sample 12 and/or noise in the holographic signal 11a of the object 11 may cause an artifact 14. As shown in the middle of FIG. 3, an object signal loss may be caused with the noise from the liquid sample signal (e.g., the first ring pattern). This will result in loss of information of the object 11 in the image 31 as well. For example, ring-like artifacts 14 caused by the liquid sample 12 may come from the unknown phase of the hologram, which is due to the in-line lens-free holographic imaging used in this disclosure. These artifacts 14 may occupy most of the area inside the liquid sample 12. For removing the artifact 14, the first ring pattern from the liquid sample 12 may thus be removed.

As shown on the right side of FIG. 3, typically there is a combination of many kinds of artifacts, including the previously described. In the following, some parameters are listed, which may cause such artifacts 14, and may be addressed by the method 20 of the present disclosure.
- A size of the liquid sample 12, which is defined by the microwell.
- A 3D shape of the liquid sample 12, e.g., round, square, an irregular shape, a contact angle difference, etc., which are defined by the microwell.
- A mismatch of an optical property of the material of the liquid sample 12 and the environment, e.g., the material of the microwell.
- An object density in a liquid sample 12, in case of multiple objects 11 inside a liquid sample 12.
- A homogeneity of multiple liquid samples 12, in particular, a homogeneity in shape, size, and/or material.
- A homogeneity of objects 11 inside a liquid sample 12, in particular, a homogeneity in size, shape, and/or type of object 11.
- Foreign objects (not to be analyzed) in the liquid sample 12 (e.g., inside, outside, variations of the foreign objects in shape, size, materials...).
- Multiple liquid samples 12 at different heights/depth into the imaging direction, which is unlikely but not impossible in an array of microwells; can also be the case if different microwells are not filled evenly or have different sizes and/or shapes and/or depths.
- Multiple objects 11 located at different heights/depths inside a liquid sample 12 in the imaging direction.

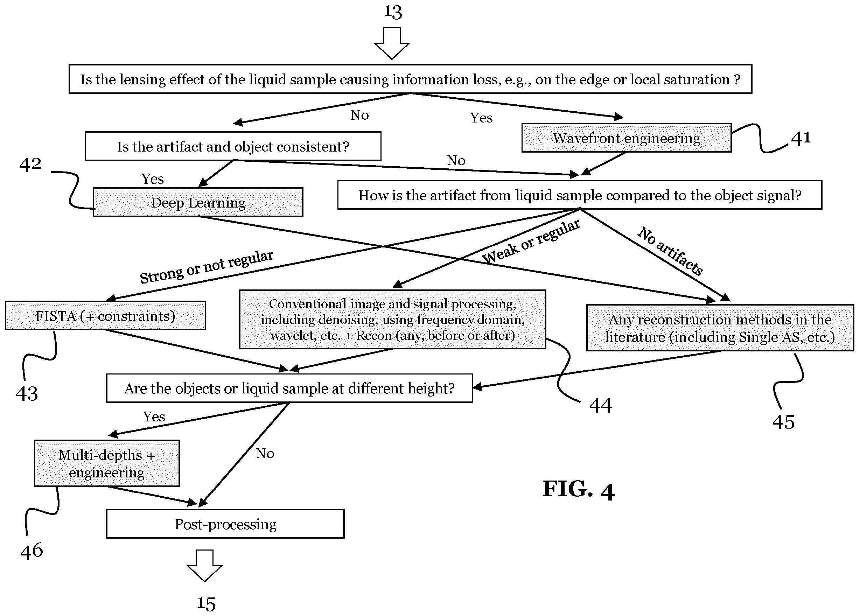

FIG. 4 shows an exemplary pipeline according to this disclosure, also referred to as meta-pipeline, for removing at least one artifact 14 or the cause of the at least one artifact 14 from a hologram 13. The pipeline is applicable for both single and multi-wavelengths in-line lens-free holographic imaging. Notably, multi-aperture can be also considered to be a special case of multi-wavelengths.

The pipeline may provide various methods for removing the at least one artifact 14 or the cause of the at least one artifact 14. In particular, the pipeline may offer wave front engineering 41, deep learning filtering 42, a FISTA algorithm or a similar algorithm, conventional image and signal processing 44, and multi-depths reconstruction 46 as possible methods to remove the artifact 14.

One or more of the various methods may be selected, for instance, depending on the type of the at least one artifact 14 and/or based on environmental conditions. In the example of FIG. 4, the hologram 13 is input into the pipeline. At first, the exemplary pipeline considers, whether a lensing effect of the liquid sample 12 causes information loss, for example, at the edge or of local saturation. If this is the case, then wavefront engineering 41 may be selected.

If this is not the case, the pipeline further considers whether the at least one artifact 14 and the object 11 are consistent. If yes, then deep learning 42 can be applied. Afterwards, any reconstruction method 45 - e.g. as conventionally described in the literature - can be applied to reconstruct the image 15 from the hologram 13.

After applying the wavefront engineering 41, the pipeline may further consider, how the artifact 14 caused by the liquid sample 12 is compared to the object signal. Exemplary possibilities here are "strong or not regular", "weak or regular", or "no artifacts". If there are no artifacts 14, the conventional reconstruction 45 can be used as described above.

In case of "stronger or not regular" artifacts 14, the FISTA algorithm 43 can be applied. In case of "weaker or regular" artifacts 14, conventional image and signal processing 44 may be applied, and may be sufficient to remove such artifacts 14.

Subsequently, the pipeline may further consider whether there are objects 11 or liquid samples 12 at different heights/depth of the imaging direction. If yes, then multi-depths reconstruction 46 can be applied, which may be followed by post-processing afterwards, so as to output the final image 15. If not, then the post-processing can be applied directly.

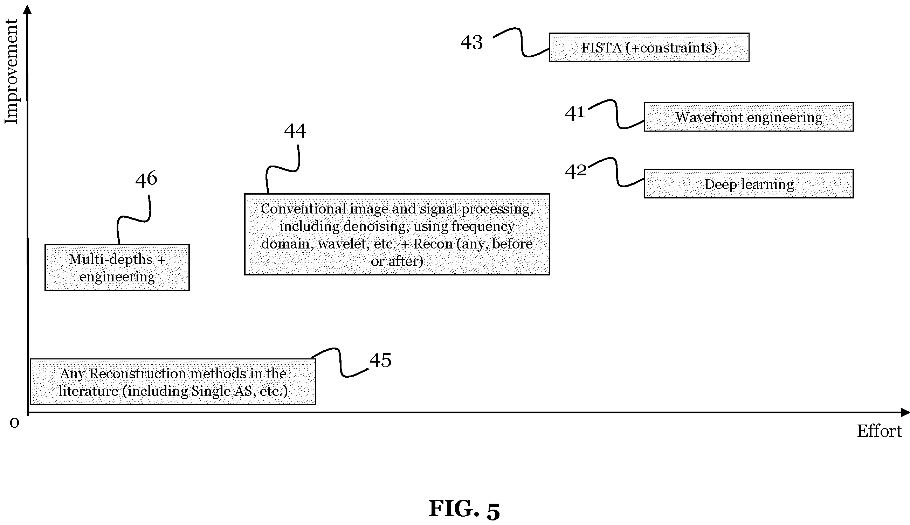

FIG. 5 compares various methods of removing the at least one artifact 14 or the cause of the at least one artifact 14 from the hologram 13, as shown in FIG. 4. In particular, FIG. 5 evaluates a trade-off between a strength of improvement of the respective method (on the y-axis) and effort, e.g., computational or physical, of the respective method (on the x-axis).

In view of FIG. 5, the method 20 may further include a step of determining a strength of the at least one artifact 14, and a step of selecting how to remove the at least one artifact 14 or the cause of the at least one artifact 14 based on the determined strength. The strength of the artifact 14 or cause may thereby be set in correspondence with the improvement shown in Fig. 5. That is, the stronger (higher strength) the artifact 14 or cause is, the larger the improvement achieved with the selected method advantageously is.

Notably, the strength of the at least one artifact 14 may be determined by comparing at least one parameter of the object 11 in the hologram 13 (with the liquid sample 12) and in at least one reference hologram of the object 11 without liquid sample 12.

In the following, the various methods for removing the artifact(s) 14 or cause of the artifact(s) 14 are illustrated and explained.

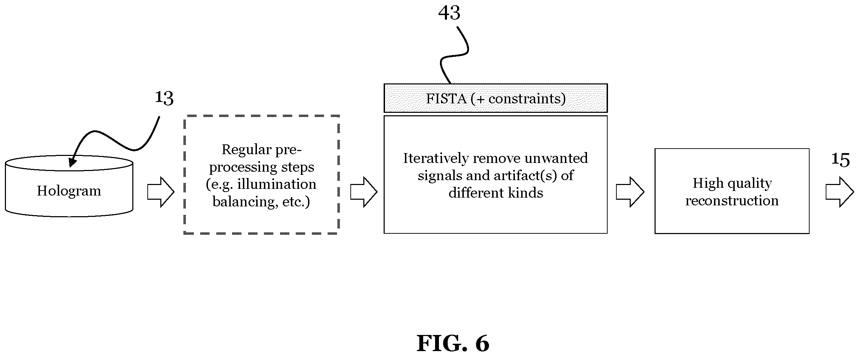

FIG. 6 shows a method based on using the FISTA algorithm 43 for removing stronger artifacts 14 from the hologram 13. The method 20 comprises, in this case, a step of processing the at least one hologram 13 with one or more numerical optimization algorithms. These algorithms may include the FISTA algorithm 43 as shown. Also an ADMM algorithm may be included instead of FISTA. The FISTA algorithm 43 may be performed based on certain constraints (e.g., l1 constraint to minimize a ring effect from the liquid sample and/or a box constraint to remove some bright artifact), which may be selected depending on the determined artifact(s) 14 or the desired characteristics 25 to be recognized. The FISTA algorithm 43 may be performed iteratively, in order remove unwanted signals and artifacts 14 of different kinds form the hologram 13. The FISTA algorithm 43 itself is known, compare e.g., *"*Fast compressive lens-free tomography for 3D biological cell culture imaging" Luo, Zhenxiang, et al., Optics Express 28.18 (2020): 26935-26952.

Before applying the FISTA algorithm 43, regular pre-processing steps may be applied to the hologram 13, for instance, illumination balancing. After applying the FISTA algorithm 43, a high-quality reconstruction may be performed to obtain the image 15.

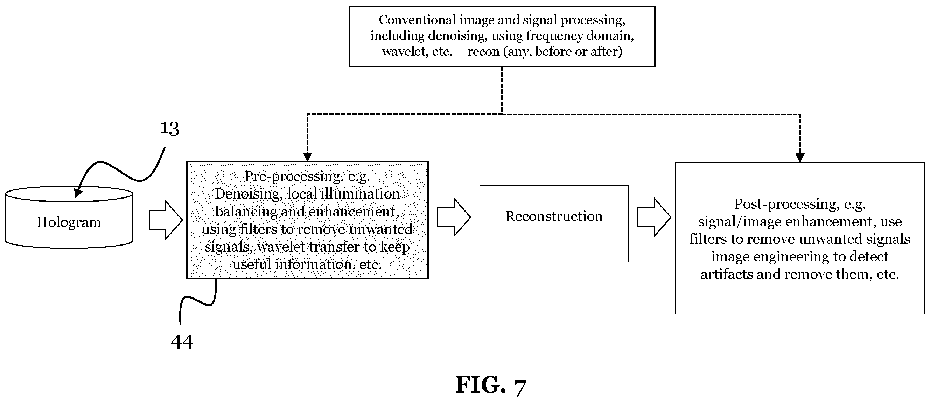

FIG. 7 shows a conventional image and signal processing for removing weaker artifacts 14 from the hologram 13. The method 20 comprises, in this case, removing 22 the at least one artifact 14 or the cause of the at least one artifact 14 by processing the at least one hologram 13 by at least one image processing method 44. The image processing method 44 may comprise denoising, local illumination balancing and enhancement, using filters to remove unwanted signals, wavelet transfer etc. After the image processing method 44 is applied, a reconstruction may be made of the hologram 13 to obtain the image 15. Afterwards, conventional image processing methods may be applied to the image 15. These may include signal or image enhancement, filters to remove unwanted signals, image engineering to detect artifacts and remove them.

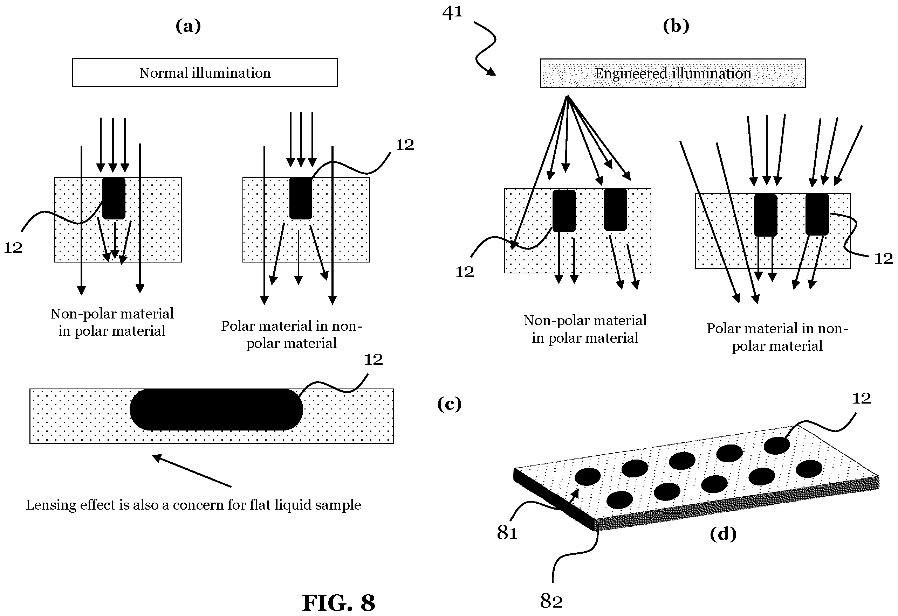

FIG. 8 illustrates wavefront engineering 41 to remove causes of artifacts 14. The method 20 comprises, in this case, a step of regenerating the hologram 13 of the objects 11 contained in the liquid sample 12 using in-line lens-free holographic imaging, wherein a second illumination wavefront is used for regenerating the hologram 13. The second illumination wavefront is different from a first illumination wavefront that was used for generating 23 the hologram 13. The second illumination wavefront comprises a single wavelength or multiple wavelengths.

FIG. 8(a) shows examples in case of a normal illumination during the in-line lens-free holographic imaging. In particular, FIG. 8(a) shows on the left side an example of a liquid sample 12 of a non-polar material in a microwell made of a polar material, e.g., an oil liquid sample 12 in a glass or PMMA microwell. Further, FIG. 8(a) shows on the right side an example of a liquid sample 12 of a polar material in a microwell of a non-polar material, e.g., a water liquid sample 12 in an untreated polystyrene or polypropylene microwell. Lensing effects of the liquid sample 12 are illustrated by the arrows after the liquid sample 12. FIG. 8(b) shows the same examples in case of an engineered illumination, which may use an illumination wavefront specifically selected to avoid the lensing effects of the liquid sample 12, as illustrated by the more parallel arrows after the liquid sample 12. These lensing effects are due to the different materials (e.g. oil and water). However, as shown at the bottom of FIG. 8, lensing effects are also a concern for certain liquid sample shapes, e.g., for flat liquid samples 12 in flat or shallow microwells, as illustrated in FIG. 8(c).

FIG. 8(d) shows an example of microwells 81 arranged in a microwell array on a microplate 82 or chip, the microwells 81 containing liquid samples 12.

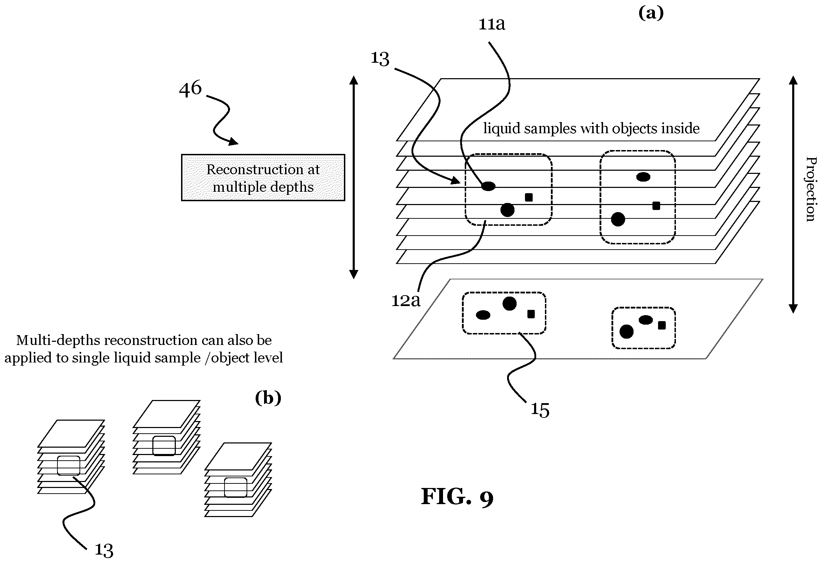

FIG. 9 illustrates a method using multi-depths reconstruction for removing artifacts 14 from the hologram 13. The method 10 comprises, in this case, as step of generating the image 15 by multi-depth reconstruction 46 of the at least one hologram 13 obtained by in-line lens-free holographic imaging. That means the reconstruction of the hologram 13 is performed at multiple depths (in direction of the imaging, i.e., illumination wavefront), so that a projection onto the planar image 15 is achieved. Notably, the multi-depths reconstruction can also be applied to single liquid sample/object levels.

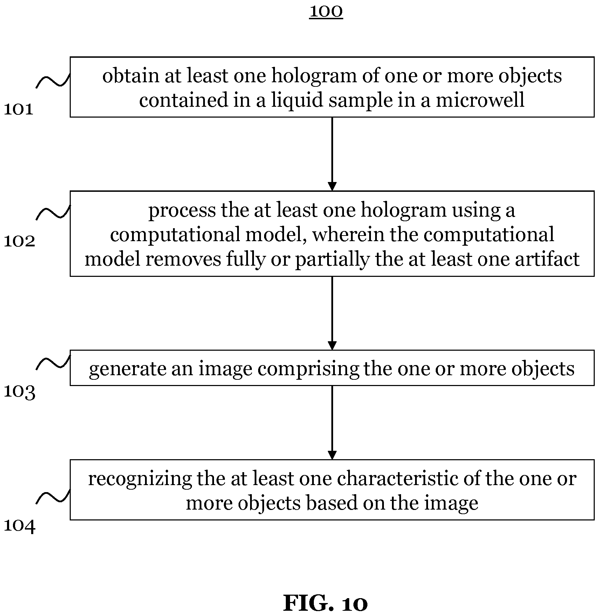

FIG. 10 shows a flow-diagram of a computer-implemented method 100 according to this disclosure. The method 100 is for recognizing at least one characteristic 25 of one or more objects 11 contained in a liquid sample 12 in a microwell. The method 100 is in parts similar to the method 20.

The method 100 comprises a step 101 of obtaining at least one hologram 13 of the one or more objects 11 contained in the liquid sample 12. For instance, the at least one hologram 13 may be provided to the computer or processor that implements the method 100, and/or may be obtained from a holographic imager. The at least one hologram 13 has been previously generated using in-line lens-free imaging, for example, by the holographic imager. As in the method 20 of FIG. 2, the at least one hologram 13 includes at least one artifact 14, which is at least caused by the presence of the liquid sample 12 and affects the at least one characteristic 25 of the one or more objects 11 contained in the liquid sample 12.

The method 100 further comprises a step 102 of processing the at least one hologram 13 using a computational model 42, for instance, a neural network. The computational model 42 removes fully or partially the at least one artifact 14. The hologram 13 with the artifact(s) 14 may be input into the computational model 42, and the hologram without the artifact(s) may be output by the computational model 42. The computational model 42 may be a trained and/or trainable model.

The method 100 further comprises a step 103 of generating an image 15, after or during the removing step 102 of the at least one artifact 14, wherein the image 15 comprises the one or more objects 11. The image 15 may be generated by reconstruction of the hologram 13. Then, the method 100 comprises a step 104 of recognizing the at least one characteristic 25 of the one or more objects 11 based on the image 15. The steps 103 and 104 may be either or both performed by the computational model 42.

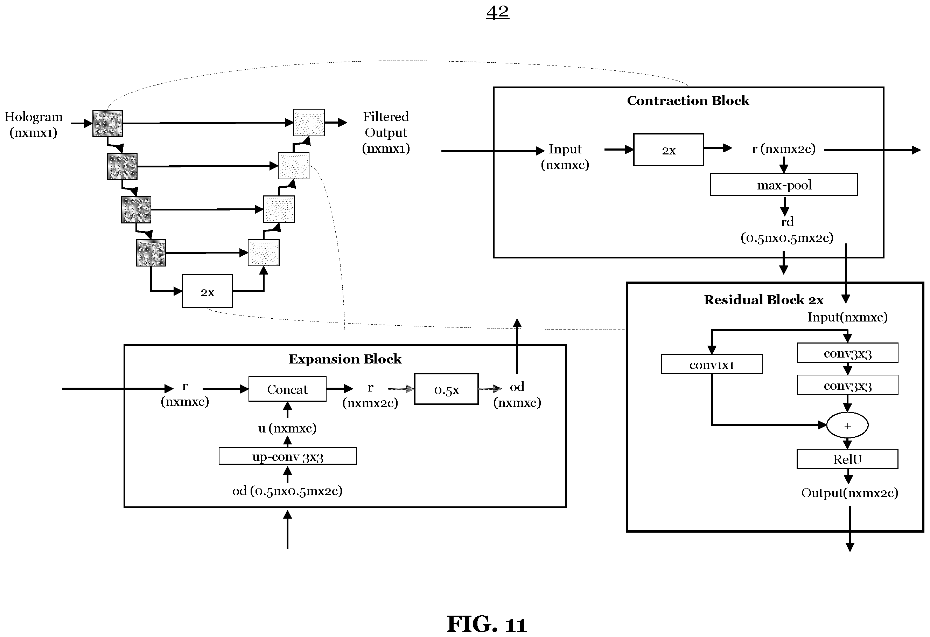

According to the above, the computational model 42 may remove artifacts 14 caused by liquid samples 12 on the hologram level, prior to reconstruction. FIG. 11 shows a computational model, particularly a deep neural network, which can be used for the method of FIG. 10. The shown computational model 42 is, in particular, a 4-level UNet with contraction blocks, expansion blocks, and residual blocks.

A simulated dataset may be used to train the computational model 42, wherein the following parameters may generally be considered in the simulated dataset: experimental conditions; desired artifacts properties; expected objects properties. Specifically, the dataset may include or be based on the certain parameters e.g. sensor specifications, optical parameters of the setup, the morphological features (like size, shape, etc.) and property (for example, reflex index, which is related with the materials) of the liquid samples, objects, property of the artifacts, simulated setup configurations.

During the training of the computational model 42, the input may be a signal that includes both a plurality of possible artifacts 14 and a plurality of objects 11 in any combination with another. The expected output to train the model 42 is a signal comprising the objects 11 alone. Thereby, during the training, a loss may be a mean squared error (MSE) loss, an ADAM optimizer may be used, a starting learning rate (LR) may be small, and an LR update policy may be employed.

The main observations of using the computation model 42 are that the result is quite satisfactory on the simulated data, and that the removal of the artifacts 14 from holograms 13 including liquid sample signal 12a and object signal 11a works well.

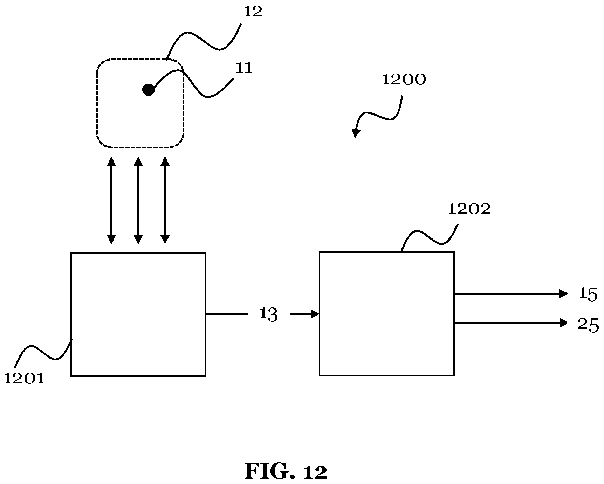

FIG. 12 shows schematically an apparatus 1200 according to this disclosure, for imaging and recognizing at least one characteristic 25 of one or more objects 11 contained in a liquid sample 12. The apparatus 12 may perform the method 20 of FIG. 2.

The apparatus 1200, to this end, comprises a holographic imager 1201, which is configured to generate at least one hologram 13 of the one or more objects 11 contained in the liquid sample 12 using in-line lens-free holographic imaging. The holographic imager 1201 may to this end illuminate the liquid sample 12 including the object 11, for instance, with a selected wavefront including one or more wavelengths. Wavefront engineering 41 may be applied using the holographic imager 1201. Like in FIG. 2, the at least one hologram 13 includes at least one artifact 14, which is at least caused by the presence of the liquid sample 12, and affects the at least one characteristic 25 of the one or more objects 11 in the liquid sample 12.

The apparatus 1200 further comprises a processor 1202, which is configured to remove fully or partially the at least one artifact 14 or the cause of the at least one artifact 14. The processor 1202 is further configured to generate an image 15, after or during removing the at least one artifact 14 or the cause of the at least one artifact 14, comprising the one or more objects 11, and to recognize the at least one characteristic 25 of the one or more objects 11 based on the image 15. The processor 1202 is accordingly configured to perform artifact removal and reconstruction of the hologram 13, for example, by reconstruction methods known in the art.

The processor 1202 may comprise processing circuitry (not shown) configured to perform, conduct or initiate the various operations described. The processing circuitry may comprise hardware and/or the processing circuitry may be controlled by software. The hardware may comprise analog circuitry or digital circuitry, or both analog and digital circuitry. The digital circuitry may comprise components such as application-specific integrated circuits (ASICs), field-programmable arrays (FPGAs), digital signal processors (DSPs), or multi-purpose processors. The processor 1202 may further comprise memory circuitry, which stores one or more instruction(s) that can be executed by the processor 1202 or by the processing circuitry, in particular under control of the software. For instance, the memory circuitry may comprise a non-transitory storage medium storing executable software code which, when executed by the processor or the processing circuitry, causes the various operations of the processor 1202 to be performed.

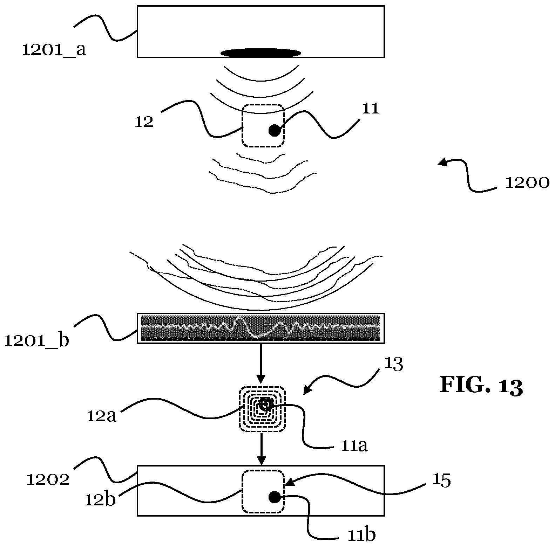

FIG. 13 highlights that the apparatus 1200 performs in-line lens-free holographic imaging. The holographic imager 1201 of the apparatus 1200 comprises a light source 1201_a. With this light source 1201_a, the holographic imager 1201 is configured to illuminate the liquid sample 12 including the at least one object 12. For reasons of simplicity, again only one object 11 is shown in the liquid sample 12. Also, only one liquid sample 12 is shown, however, the apparatus 1200 works likewise with multiple objects 11 and/or multiple liquid samples 12. The light waves emitted by the light source 1021_a may partly interact with the liquid sample 12, particularly with the object 11, and may partly go through the liquid sample 12 without interaction.

The holographic imager 1201 of FIG. 13 further comprises a recording medium 1201_b, typically a digital sensor, which is configured to record an interference pattern of the respective light waves - i.e., those light waves that have interacted with the liquid sample/object and those light waves which have not. The holographic imager 1201 is in this way configured to obtain the hologram 13. Since the recording medium 1201_b is arranged behind the liquid sample/object along the light path originating at the light source 1201_a, and is thus arranged to record also directly light waves passing through the liquid sample 12, the holographic imager 1201 has an in-line configuration for in-line holographic imaging. Moreover, no lens is needed in this configuration, for example, because no light beam needs to be deflected, so the holographic imaging performed by the apparatus 1200 is also lens-free. Generally, in-line lens-free holographic imaging captures holograms 13 without using lenses by recording interference patterns directly on the recording medium 1201_b, wherein a coherent light source 1201_a aligned with the liquid sample 12 and recording medium 1201_b may be used as an example (but not required).

The processor 1202 of the apparatus 1200 is further able perform the reconstruction of the hologram 13 after or during artifact removal, for example, by reconstruction methods known in the art, so as to obtain the image 15.

In sum, the present disclosure provides a solution for using in-line lens-free holographic imaging, to obtain high-quality images 15 of objects 11 in liquid samples 12, and to obtain characteristics 25 of the objects 11 based on the images 15.

In the claims as well as in the description of this disclosure, the word "comprising" does not exclude other elements or steps and the indefinite article "a" or "an" does not exclude a plurality. A single element may fulfill the functions of several entities or items recited in the claims. The mere fact that certain measures are recited in the mutual different dependent claims does not indicate that a combination of these measures cannot be used in an advantageous implementation.

## Claims

1. A method (20) for imaging and recognizing at least one characteristic (25) of one or more objects (11) contained in a liquid sample (12) in a microwell (81), the method (20) comprising:
generating (21) at least one hologram (13) of the one or more objects (11) contained in the liquid sample (12), wherein the at least one hologram (13) is generated using in-line lens-free imaging;
wherein the at least one hologram (13) includes at least one artifact (14), which is at least caused by the presence of the liquid sample (12) and affects the at least one characteristic (25) of the one or more objects (11) contained in the liquid sample (12);
removing (22) fully or partially the at least one artifact (14) or the cause of the at least one artifact (14);
generating (23) an image (15), after or during removing the at least one artifact (14) or the cause of the at least one artifact (14), comprising the one or more objects (11); and
recognizing (24) the at least one characteristic (25) of the one or more objects (11) based on the image (15).

2. The method (20) according to claim 1, wherein the at least one artifact (14) comprises:
an interference in the hologram (13) of a first holographic signal (12a) of the liquid sample (12) and one or more second holographic signals (11a) of the one or more objects (11); and/or
noise in the first holographic signal (12a) of the liquid sample (12) and/or the one or more second holographic signals (11a) of the one or more objects (11).

3. The method (20) according to one of the claim 1 or 2, wherein removing (22) the at least one artifact (14) or the cause of the at least one artifact (14) comprises:
regenerating (41) the at least one hologram (13) of the one or more objects (11) contained in the liquid sample (12), wherein a second illumination wavefront is used for regenerating (41) the at least one hologram (13), which is different from a first illumination wavefront that was used for generating (23) the at least one hologram (13).

4. The method (20) according to claim 3, wherein the second illumination wavefront comprises a single wavelength or multiple wavelengths.

5. The method (20) according to one of the claims 1 to 4, wherein removing (22) the at least one artifact (14) or the cause of the at least one artifact (14) comprises:
processing the at least one hologram (13) with one or more numerical optimization algorithms, such as a fast iterative shrinkage-thresholding, FISTA, algorithm (43) or an Alternating Direction Method of Multipliers, ADMM, algorithm.

6. The method (20) according to one of the claims 1 to 5, wherein removing (22) the at least one artifact (14) or the cause of the at least one artifact (14) comprises:
processing the at least one hologram (13) by at least one image processing method (44).

7. The method (20) according to one of the claims 1 to 6, wherein removing (22) the at least one artifact (14) or the cause of the at least one artifact (14) comprises:
generating the image by multi-depth reconstruction (46) of the at least one hologram (13).

8. The method (20) according to one of the claim 1 to 7, further comprising:
determining a strength of the at least one artifact (14); and
selecting how to remove the at least one artifact (14) or the cause of the at least one artifact (14) based on the determined strength.

9. The method (20) according to claim 8, wherein:
the strength of the at least one artifact (14) is determined by comparing at least one parameter of the one or more objects (11) in the at least one hologram (13) and in at least one reference hologram of the one or more objects (11) without liquid sample (12).

10. The method (20) according to one of the claims 1 to 9, wherein the at least one characteristic (25) of the one or more objects (11) comprises at least one of the following:
- a number of the one or more objects (11) contained in the liquid sample (12);
- a density of the one or more objects (11) in the liquid sample (12);
- a respective size and/or shape of each object (11) of the one or more objects (11) in the liquid sample (12);
- a respective position of each object (11) of the one or more objects (11) in the liquid sample (12);
- a motion pattern of the one or more objects (11) in the liquid sample (12);
- a reflective index of the one or more objects (11) in the liquid sample (15).

11. An apparatus (1200) for imaging and recognizing at least one characteristic (25) of one or more objects (11) contained in a liquid sample (12), the apparatus (1200) comprising:
a holographic imager (1201) configured to generate at least one hologram (13) of the one or more objects (11) contained in the liquid sample (12) using in-line lens-free imaging;
wherein the at least one hologram (13) includes at least one artifact (14), which is at least caused by the presence of the liquid sample (12) and affects the at least one characteristic (25) of the one or more objects (11) in the liquid sample (12); and
a processor (1202) configured to remove fully or partially the at least one artifact (14) or the cause of the at least one artifact (14);
wherein the processor (1202) is further configured to generate an image (15), after or during removing the at least one artifact (14) or the cause of the at least one artifact (14), comprising the one or more objects (11), and to recognize the at least one characteristic (25) of the one or more objects (11) based on the image (15).

12. A computer-implemented method (100) for recognizing at least one characteristic (25) of one or more objects (11) contained in a liquid sample (12) in a microwell (81), the method (110) comprising:
obtaining (101) at least one hologram (13) of the one or more objects (11) contained in the liquid sample (12) wherein the at least one hologram (13) has been generated using in-line lens-free imaging;
wherein the at least one hologram (13) includes at least one artifact (14), which is at least caused by the presence of the liquid sample (12) and affects the at least one characteristic (25) of the one or more objects (11) contained in the liquid sample (12);
processing (102) the at least one hologram (13) using a computational model (42), wherein the computational model (42) removes fully or partially the at least one artifact (14);
generating (103) an image (15), after or during removing the at least one artifact (14), comprising the one or more objects (11); and
recognizing (104) the at least one characteristic (25) of the one or more objects (11) based on the image (15).

13. The computer-implemented method (100) of claim 12, wherein the computational model (42) is a deep learning neural network.

14. A computer program comprising instructions which, when the program is executed by a processor, for example the processor (1202) of the apparatus (1200) of claim 12, causes the processor to perform the method (100) according to claim 12 or 13.
